# EUROPEAN PATENT APPLICATION

(11) **EP 3 731 326 A1**
(43) Date of publication of application: **28.10.2020**
(21) Application number: 18915088.1
(22) Date of filing: 22.05.2018
(51) Int. Cl.: H01M 10/0525

(54) **LITHIUM SECONDARY BATTERY ELECTROLYTE AND LITHIUM SECONDARY BATTERY THEREOF**

(30) Priority: 18.04.2018 CN 201810348334
(71) Applicant: Guangzhou Tinci Materials Technology Co., Ltd, Guangzhou, Guangdong 510760 (CN)
(72) Inventor: FAN, Weizhen, Guangzhou, Guangdong 510760 (CN); YU, Le, Guangzhou, Guangdong 510760 (CN); FAN, Chaojun, Guangzhou, Guangdong 510760 (CN); ZHAO, Jingwei, Guangzhou, Guangdong 510760 (CN)
(74) Representative: McCallum, Graeme David
(86) International application number: PCT/CN2018/087899
(87) International publication number: WO 2019/200655

(57) **Abstract**

The present invention relates to a lithium secondary battery electrolyte and a lithium secondary battery thereof. The lithium secondary battery electrolyte comprises an organic solvent, a conductive lithium salt, an ionic liquid, and an additive. The ionic liquid is selected from at least one of 1-ethyl-3-methylimidazole tetrafluoroborate and dipyrrolidinyl ammonium tetrafluoroborate. For the electrolyte, by adding the ionic liquids 1-ethyl-3-methylimidazole tetrafluoroborate and dipyrrolidinyl ammonium tetrafluoroborate to use in combination with additives lithium difluorophosphate, methyl 2-propynylcarbonate, methyl allyl carbonate, and 1,3 propane sultone, the high temperature, normal temperature and low temperature cycle performance of the electrolyte can be improved.

## Description

### TECHNICAL FIELD

The present disclosure relates to the field of lithium secondary battery technology, in particular to electrolytes for lithium secondary battery containing ionic liquids and lithium secondary batteries containing the electrolyte.

### BACKGROUND

In order to improve the high temperature performance of lithium-ion batteries, solvents with higher boiling points, such as diethyl carbonate and ethyl methyl carbonate, are generally selected as a main solvent of an electrolyte. However, these solvents have relatively high melting points, and the conductivity of the electrolyte drops very quickly at low temperature and the impedance of the battery increases rapidly, making it difficult to meet the low temperature discharge performance of the battery. In order to improve the low temperature performance of the battery, carboxylates with lower melting points, such as ethyl acetate and ethyl propionate, are generally selected as the main solvent of the electrolyte. However, these solvents have relatively low boiling points, which is detrimental to the high temperature performance of the battery. In terms of additives, in order to improve the high temperature performance, additives such as vinylene carbonate and vinylethylene carbonate are generally used. However, such additives will cause a large impedance for battery, especially, the impedance of the battery increases very significantly at low temperatures, resulting the reduction of the low temperature performance of the battery. Patent CN201110040162.4 discloses an electrolyte for a 300Ah high and low temperature lithium iron phosphate battery. By adding different additives to the electrolyte, the conductivity of the electrolyte is improved in principle and the low temperature performance of the battery is improved. However, there is no disclosed examples for improving high temperature performance.

It is difficult to improve both the high temperature and low temperature performances of the battery simultaneously through the electrolyte. Hence, it is necessary to develop an electrolyte that can improve both the high temperature and low temperature performances of the battery simultaneously.

### SUMMARY

Based on the above, one object of the present disclosure is to provide an electrolyte for a lithium secondary battery that can improve both the high temperature and low temperature performances of the battery simultaneously.

The specific technical solutions are as follows:
An electrolyte for a lithium secondary battery is provided comprising an organic solvent, a conductive lithium salt, an ionic liquid, and an additive.

In some embodiments, the ionic liquid may be at least one selected from 1-ethyl-3-methylimidazolium tetrafluoroborate and dipyrrolidinyl ammonium tetrafluoroborate, and has a content of 0.1%-10.0% of the total mass of the electrolyte for lithium secondary battery.

In some embodiments, the additive may be at least one selected from the group consisting of lithium difluorophosphate, 2-propynyl methyl carbonate, allyl methyl carbonate, and 1,3-propanesultone, and has a content of 0.1%-5.0% of the total mass of the electrolyte for lithium secondary battery.

In some embodiments, the conductive lithium salt may be at least one of lithium hexafluorophosphate or lithium bisfluorosulfonimide, and has a content of 8.0%-18.0% of the total mass of the electrolyte for lithium secondary battery.

In some embodiments, the organic solvent may consist of a cyclic solvent and a linear solvent with a mass ratio of (1∼3):3, and the organic solvent may have a content of 67.0%-91.8% of the total mass of the electrolyte for lithium secondary battery.

In some embodiments, the cyclic solvent may be at least one selected from the group consisting of ethylene carbonate, propylene carbonate, γ-butyrolactone, and 1,4-butylsultone.

In some embodiments, the line-shaped solvent may be at least one selected from the group consisting of dimethyl carbonate, ethyl methyl carbonate, diethyl carbonate, ethyl acetate, propyl propionate, 1,1,2,2-tetrafluoroethyl-2,2,3,3-tetrafluoropropyl ether and 2,2-difluoroethyl acetate.

Another object of the present disclosure is to provide a lithium secondary battery.

A lithium secondary battery is provided comprising the above-mentioned electrolyte for the lithium secondary battery (further comprising a positive electrode plate containing a positive electrode active material, a negative electrode plate containing a negative electrode active material, and a diaphragm).

In the above-mentioned lithium secondary battery, the positive electrode active material may refer to a lithium-containing metal compound that is at least one of Li₁₊ₐ(NiₓCo_{y}M_{1-x-y})O₂, Li(NiₚMn_{q}Co_{2-p-q})O₄, and LiMₕ(PO₄)ₘ, wherein 0≤a≤0.3, 0≤x≤1, 0≤y≤1, 0<x+y≤1, 0≤p≤2, 0≤q≤2, 0<p+q≤2, and M is Fe, Ni, Co, Mn, Al or V, 0<h<5, 0<m<5; and the negative electrode active material may include at least one of lithium metal, a lithium alloy, a carbon material, a silicon-based material and a tin-based material.

The above-mentioned electrolyte for lithium secondary battery has the following advantages and beneficial effects:
According to the above electrolyte, by adding ionic liquids, such as 1-ethyl-3-methylimidazolium tetrafluoroborate and dipyrrolidinyl ammonium tetrafluoroborate, in combination with additives, such as lithium difluorophosphate, 2-propynyl methyl carbonate, allyl methyl carbonate, and 1,3-propanesultone, the high temperature, normal temperature and low temperature cycle performances of the battery can be improved.

### DETAILED DESCRIPTION OF THE EMBODIMENTS

For better understanding of the present disclosure, the present disclosure will be described more fully below. However, the present disclosure may be implemented in many different forms, and is not limited to the embodiments described in the present disclosure. On the contrary, the purpose of these embodiments is merely to make the understanding of the disclosure of the present disclosure more thorough.

Unless otherwise defined, all terms herein, including technical and scientific terms, shall have the same meaning as commonly accepted by a person skilled in the art to which this disclosure belongs. Such terms, as used herein, are for the purpose of describing exemplary examples of, and without limiting, the present disclosure.

### Example 1

The electrolyte for a lithium secondary battery according to this example is composed of an organic solvent, a conductive lithium salt, 1-ethyl-3-methylimidazolium tetrafluoroborate, and an additive. The organic solvent has a content of 80.0% of the total mass of the electrolyte for lithium secondary battery, and consists of a cyclic solvent (i.e., ethylene carbonate) and a linear solvent (i.e., ethyl methyl carbonate), and a mass ratio of the ethylene carbonate and the ethyl methyl carbonate is 1:1. The conductive lithium salt is lithium hexafluorophosphate, which has a content of 18.0% of the total mass of the electrolyte for lithium secondary battery. The 1-ethyl-3-methylimidazolium tetrafluoroborate has a content of 0.5% of the total mass of the electrolyte. The additive is lithium difluorophosphate and 2-propynyl methyl carbonate, which respectively have a content of 1.0% and 0.5% of the total mass of the electrolyte. The electrolyte of this example can be applied to LiNi_{0.8}Co_{0.1}Mn_{0.1}O₂/graphite soft pack battery.

### Example 2

The electrolyte for a lithium secondary battery according to this example is composed of an organic solvent, a conductive lithium salt, dipyrrolidinyl ammonium tetrafluoroborate and an additive. The organic solvent has a content of 79.5% of the total mass of the electrolyte for lithium secondary battery, and consists of a cyclic solvent (i.e., ethylene carbonate) and a linear solvent (i.e., dimethyl carbonate), and a mass ratio of the ethylene carbonate and the dimethyl carbonate is 1:2. The conductive lithium salt is lithium hexafluorophosphate, which has a content of 15.0% of the total mass of the electrolyte for lithium secondary battery. The dipyrrolidinyl ammonium tetrafluoroborate has a content of 3.0% of the total mass of the electrolyte. The additive is allyl methyl carbonate, which has a content of 2.5% of the total mass of the electrolyte. The electrolyte of this example can be applied to LiNi_{0.8}Co_{0.1}Mn_{0.1}O₂/silicon-carbon soft pack battery.

### Example 3

The electrolyte for a lithium secondary battery according to this example is composed of an organic solvent, a conductive lithium salt, dipyrrolidinyl ammonium tetrafluoroborate and an additive. The organic solvent has a content of 77.0% of the total mass of the electrolyte for lithium secondary battery, and consists of a cyclic solvent (i.e., ethylene carbonate) and a linear solvent (i.e., diethyl carbonate), and a mass ratio of the ethylene carbonate and the diethyl carbonate is 1:3. The conductive lithium salt is lithium hexafluorophosphate, which has a content of 12.0% of the total mass of the electrolyte for lithium secondary battery. The dipyrrolidinyl ammonium tetrafluoroborate has a content of 10% of the total mass of the electrolyte. The additive is lithium difluorophosphate, which has a content of 1.0% of the total mass of the electrolyte. The electrolyte of this example can be applied to LiNi_{0.6}Co_{0.2}Mn_{0.2}O₂/graphite soft pack battery.

### Example 4

The electrolyte for a lithium secondary battery according to this example is composed of an organic solvent, a conductive lithium salt, 1-ethyl-3-methylimidazolium tetrafluoroborate and an additive. The organic solvent has a content of 78.5% of the total mass of the electrolyte for lithium secondary battery, and consists of a cyclic solvent (i.e., ethylene carbonate and propylene carbonate) and a linear solvent (i.e., ethyl methyl carbonate and propyl propionate), and the mass ratio of ethylene carbonate, propylene carbonate, ethyl methyl carbonate and propyl propionate is 1:0.5:1:1. The conductive lithium salt is lithium hexafluorophosphate, which has a content of 12.0% of the total mass of the electrolyte for lithium secondary battery. The 1-ethyl-3-methylimidazolium tetrafluoroborate has a content of 6.0% of the total mass of the electrolyte. The additive is lithium difluorophosphate and 1,3-propanesultone, which respectively have a content of 0.5% and 3.0% of the total mass of the electrolyte. The electrolyte of this example can be applied to LiNi_{0.6}Co_{0.2}Mn_{0.2}O₂/ silicon-carbon soft pack battery.

### Example 5

The electrolyte for a lithium secondary battery according to this example is composed of an organic solvent, a conductive lithium salt, 1-ethyl-3-methylimidazolium tetrafluoroborate and an additive. The organic solvent has a content of 87.5% of the total mass of the electrolyte for lithium secondary battery, and consists of a cyclic solvent (i.e., ethylene carbonate) and a linear solvent (i.e., ethyl methyl carbonate and 1,1,2,2-tetrafluoroethyl-2,2,3,3-tetrafluoropropyl ether), and the mass ratio of ethylene carbonate, propylene carbonate, ethyl methyl carbonate and 1,1,2,2-tetrafluoroethyl-2,2,3,3-tetrafluoropropyl ether is 1:2:0.5. The conductive lithium salt is lithium hexafluorophosphate, which has a content of 8.5% of the total mass of the electrolyte for lithium secondary battery. The 1-ethyl-3-methylimidazolium tetrafluoroborate has a content of 1.0% of the total mass of the electrolyte. The additive is 2-propynyl methyl carbonate and 1,3-propanesultone, which respectively have a content of 1.0% and 2.0% of the total mass of the electrolyte. The electrolyte of this example can be applied to LiNi_{0.5}Co_{0.2}Mn_{0.3}O₂/ graphite soft pack battery.

### Example 6

The electrolyte for a lithium secondary battery according to this example is composed of an organic solvent, a conductive lithium salt, 1-ethyl-3-methylimidazolium tetrafluoroborate, dipyrrolidinyl ammonium tetrafluoroborate and an additive. The organic solvent has a content of 86.0% of the total mass of the electrolyte for lithium secondary battery, and consists of a cyclic solvent (i.e., ethylene carbonate) and a linear solvent (i.e., ethyl methyl carbonate), and a mass ratio of the ethylene carbonate and the ethyl methyl carbonate is 1:1. The conductive lithium salt is lithium hexafluorophosphate, which has a content of 8.5% of the total mass of the electrolyte for lithium secondary battery. The 1-ethyl-3-methylimidazolium tetrafluoroborate and dipyrrolidinyl ammonium tetrafluoroborate have a content of 2.0% and 2.0% of the total mass of the electrolyte, respectively. The additive is lithium difluorophosphate and allyl methyl carbonate, which respectively have a content of 0.5% and 2.0% of the total mass of the electrolyte. The electrolyte of this example can be applied to LiNi_{0.5}Co_{0.2}Mn_{0.3}O₂/ silicon-carbon soft pack battery.

### Example 7

The electrolyte for a lithium secondary battery according to this example is composed of an organic solvent, a conductive lithium salt, 1-ethyl-3-methylimidazolium tetrafluoroborate and an additive. The organic solvent has a content of 80.0% of the total mass of the electrolyte for lithium secondary battery, and consists of a cyclic solvent (such as ethylene carbonate) and a linear solvent (such as ethyl methyl carbonate), and a mass ratio of the ethylene carbonate and the ethyl methyl carbonate is 1:1. The conductive lithium salt is lithium hexafluorophosphate and lithium bisfluorosulfonimide, which respectively have a content of 10.0% and 4.5% of the total mass of the electrolyte for lithium secondary battery. The 1-ethyl-3-methylimidazolium tetrafluoroborate has a content of 4.5% of the total mass of the electrolyte. The additive is lithium difluorophosphate, which has a content of 1.0% of the total mass of the electrolyte. The electrolyte of this example can be applied to LiNi_{0.6}Co_{0.2}Mn_{0.2}O₂/graphite soft pack battery.

### Example 8

The electrolyte for a lithium secondary battery according to this example is composed of an organic solvent, a conductive lithium salt, dipyrrolidinyl ammonium tetrafluoroborate and an additive. The organic solvent has a content of 85.0% of the total mass of the electrolyte for lithium secondary battery, and consists of a cyclic solvent (i.e., ethylene carbonate) and a linear solvent (i.e., ethyl methyl carbonate), and a mass ratio of the ethylene carbonate and the ethyl methyl carbonate is 1:1. The conductive lithium salt is lithium hexafluorophosphate and lithium bisfluorosulfonimide, which respectively have a content of 8.0% and 3.0% of the total mass of the electrolyte for lithium secondary battery. The dipyrrolidinyl ammonium tetrafluoroborate has a content of 3.0% of the total mass of the electrolyte. The additive is 2-propynyl methyl carbonate, which has a content of 1.0% of the total mass of the electrolyte. The electrolyte of this example can be applied to LiNi_{0.6}Co_{0.2}Mn_{0.2}O₂/graphite soft pack battery.

### Comparative Example 1

The method for preparing the electrolyte of this Comparative Example is the same as that of Example 1, the difference lies in that the ionic liquid 1-ethyl-3-methylimidazolium tetrafluoroborate is not contained. The electrolyte can be applied to the battery according to the same method as Example 1 to test its performance.

### Comparative Example 2

The method for preparing the electrolyte of this Comparative Example is the same as that of Example 1, the difference lies in that the additives lithium difluorophosphate and 2-propynyl methyl carbonate are not contained. The electrolyte can be applied to the battery according to the same method as Example 1 to test its performance.

### Comparative Example 3

The method for preparing the electrolyte of this Comparative Example is the same as that of Example 2, the difference lies in that the ionic liquid dipyrrolidinyl ammonium tetrafluoroborate is not contained. The electrolyte can be applied to the battery according to the same method as Example 2 to test its performance.

### Comparative Example 4

The method for preparing the electrolyte of this Comparative Example is the same as that of Example 2, the difference lies in that the additive allyl methyl carbonate is not contained. The electrolyte can be applied to the battery according to the same method as Example 2 to test its performance.

### Comparative Example 5

The method for preparing the electrolyte of this Comparative Example is the same as that of Example 3, the difference lies in that the ionic liquid dipyrrolidinyl ammonium tetrafluoroborate is not contained. The electrolyte can be applied to the battery according to the same method as Example 3 to test its performance.

### Comparative Example 6

The method for preparing the electrolyte of this Comparative Example is the same as that of Example 3, the difference lies in that the additive lithium difluorophosphate is not contained. The electrolyte can be applied to the battery according to the same method as Example 3 to test its performance.

### Comparative Example 7

The method for preparing the electrolyte of this Comparative Example is the same as that of Example 4, the difference lies in that the ionic liquid 1-ethyl-3-methylimidazolium tetrafluoroborate is not contained. The electrolyte can be applied to the battery according to the same method as Example 4 to test its performance.

### Comparative Example 8

The method for preparing the electrolyte of this Comparative Example is the same as that of Example 4, the difference lies in that the additives lithium difluorophosphate and 1,3-propanesultone are not contained. The electrolyte can be applied to the battery according to the same method as Example 4 to test its performance.

### Comparative Example 9

The method for preparing the electrolyte of this Comparative Example is the same as that of Example 1, the difference lies in that the ionic liquid contained is triethylmethylammonium tetrafluoroborate. The electrolyte can be applied to the battery according to the same method as Example 1 to test its performance.

### Comparative Example 10

The method for preparing the electrolyte of this Comparative Example is the same as that of Example 1, the difference lies in that the ionic liquid contained is 1-methyl-1-n-propylpyrrolidinium bis(trifluoromethanesulfonyl)imide. The electrolyte can be applied to the battery according to the same method as Example 1 to test its performance.

### Comparative Example 11

The method for preparing the electrolyte of this Comparative Example is the same as that of Example 2, the difference lies in that the ionic liquid contained is triethylmethylammonium tetrafluoroborate. The electrolyte can be applied to the battery according to the same method as Example 1 to test its performance.

### Comparative Example 12

The method for preparing the electrolyte of this Comparative Example is the same as that of Example 2, the difference lies in that the ionic liquid contained is 1-methyl-1-n-propylpyrrolidinium bis(trifluoromethanesulfonyl)imide. The electrolyte can be applied to the battery according to the same method as Example 1 to test its performance.

### Application experiments of Examples and Comparative Examples:

The lithium secondary batteries prepared in the above Examples 1 to 8 and Comparative Examples 1 to 8 were subjected to high temperature, normal temperature, and low temperature cycle tests.

Conditions for Charge and discharge tests are as follows. In order to measure the charge and discharge performance of the battery prepared using the electrolyte of the present disclosure, the following operations are performed: Positive and negative electrode tabs were prepared according to a conventional method. The electrolyte prepared in each example was injected into a glove box, and the electrode tabs were used to prepare a 053048 type soft pack battery. The Xinwei (BS-9300R type) battery test system was used to perform charge and discharge tests on the prepared 053048 type batteries, and results were compared with the batteries prepared by the electrolytes of the corresponding Comparative Examples. The batteries were charged and discharged for 500 weeks at a high temperature of 45°C at a rate of 3.0 to 4.2 V 1 C, for 800 weeks at a normal temperature of 25°C at a rate of 3.0 to 4.2 V 1 C, and for 100 weeks at a low temperature of -10°C at a rate of 3.0 to 4.2 V 0.2 C. The results are shown in Table 1.

**Table 1 Results of high temperature, normal temperature, and low temperature cycle tests of Examples and Comparative Examples:**

| Test index | Capacity retention rate after 500 weeks of cycle at high temperature | Capacity retention rate after 800 weeks of cycle at normal temperature | Capacity retention rate after 100 weeks of cycle at low temperature |
|---|---|---|---|
| Example 1 | 83.8% | 88.6% | 76.7% |
| Example 2 | 78.3% | 82.2% | 72.6% |
| Example 3 | 89.7% | 95.6% | 77.4% |
| Example 4 | 80.5% | 90.0% | 76.9% |
| Example 5 | 90.1% | 96.3% | 77.1% |
| Example 6 | 82.3% | 91.2% | 75.1% |
| Example 7 | 89.9% | 95.4% | 77.9% |
| Example 8 | 88.4% | 93.1% | 73.4% |
| Comparative Example 1 | 74.1% | 80.5% | 51.5% |
| Comparative Example 2 | 65.9% | 68.4% | 62.7% |
| Comparative Example 3 | 67.5% | 68.1% | 51.7% |
| Comparative Example 4 | 57.3% | 62.6% | 61.3% |
| Comparative Example 5 | 74.7% | 80.8% | 50.7% |
| Comparative Example 6 | 63.6% | 65.7% | 63.8% |
| Comparative Example 7 | 69.9% | 73.8% | 54.1% |
| Comparative Example 8 | 72.0% | 77.8% | 66.9% |
| Comparative Example 9 | 73.7% | 79.5% | 52.4% |
| Comparative Example 10 | 76.1% | 81.7% | 50.9% |
| Comparative Example 11 | 63.9% | 65.9% | 62.7% |
| Comparative Example 12 | 60.2% | 67.1% | 61.6% |

It can be seen from Table 1 that, compared with Comparative Examples 1 to 10, Examples 1 to 8 add various proportions of ionic liquids to the electrolyte in combination with the additives, thus the high temperature, normal temperature, and low temperature cycle performances of the batteries can be significantly improved. While the high temperature, normal temperature, and low temperature cycle performances of the batteries in the case where only ionic liquids or only additives are added in the electrolyte are poorer than those in the case where both ionic liquids and additives are added.

It can be seen from the results of Examples 1, 2 and Comparative Examples 9, 10, 11, and 12 that, the batteries have better high temperature, normal temperature and low temperature cycle performances in the case where the ionic liquid is 1-ethyl-3-methylimidazolium tetrafluoroborate and dipyrrolidinyl ammonium tetrafluoroborate than in the case where the ionic liquid is triethylmethylammonium tetrafluoroborate and 1-methyl-1-n-propylpyrrolidinium bis(trifluoromethanesulfonyl)imide.

Those skilled in the art can apparently appreciate that the respective technical features involved in the respective examples can be combined arbitrarily as long as they have no collision with each other. For the purpose of simplicity, not all combinations are described herein. However, such combinations should all be considered as within the scope of the present disclosure given that there is no collision.

Although the disclosure is illustrated and described herein with reference to specific examples, the disclosure is not intended to be limited to the details shown in any way. Rather, a person skilled in the art will understand that variations and modifications may be made in the details within the range of equivalents of the claims and without departing from the scope and spirit of the disclosure. Therefore, the scope of the present disclosure should only be defined by the claims attached herein.

## Claims

1. An electrolyte for a lithium secondary battery, comprising an organic solvent, a conductive lithium salt, an ionic liquid, and an additive.

2. The electrolyte for the lithium secondary battery of claim 1, wherein the ionic liquid is at least one selected from the group consisting of 1-ethyl-3-methylimidazolium tetrafluoroborate and dipyrrolidinyl ammonium tetrafluoroborate.

3. The electrolyte for the lithium secondary battery of claim 1, wherein the ionic liquid has a content of 0.1% to 10.0% of a total mass of the electrolyte for lithium secondary battery.

4. The electrolyte for lithium secondary battery of any one of claims 1 to 3, wherein the additive is at least one selected from the group consisting of lithium difluorophosphate, 2-propynyl methyl carbonate, allyl methyl carbonate, and 1,3-propanesultone.

5. The electrolyte for lithium secondary battery of any one of claims 1 to 3, wherein the additive has a content of 0.1% to 5.0% of a total mass of the electrolyte for lithium secondary battery.

6. The electrolyte for lithium secondary battery of any one of claims 1 to 3, wherein the conductive lithium salt is at least one of lithium hexafluorophosphate or lithium bisfluorosulfonimide, and the conductive lithium salt has a content of 8.0% to 18.0% of a total mass of the electrolyte for lithium secondary battery.

7. The electrolyte for lithium secondary battery of any one of claims 1 to 3, wherein the organic solvent consists of a cyclic solvent and a linear solvent.

8. The electrolyte for lithium secondary battery of claim 7, wherein the cyclic solvent is at least one selected from the group consisting of ethylene carbonate, propylene carbonate, γ-butyrolactone, and 1,4-butylsultone.

9. The electrolyte for lithium secondary battery of claim 7, wherein the line-shaped solvent is at least one selected from the group consisting of dimethyl carbonate, ethyl methyl carbonate, diethyl carbonate, ethyl acetate, propyl propionate, 1,1,2,2-tetrafluoroethyl-2,2,3,3-tetrafluoropropyl ether, and 2,2-difluoroethyl acetate.

10. A lithium secondary battery comprising the electrolyte for the lithium secondary battery of any one of claims 1 to 9.
